# DEMANDE DE BREVET EUROPEEN

(11) **EP 4 660 665 A1**
(43) Date de publication de la demande: **10.12.2025**
(21) Numéro de dépôt: 25180531.3
(22) Date de dépôt: 03.06.2025
(51) Int. Cl.: G01S 13/536, G01C 21/16, G01S 13/86, G01S 13/933, G01S 13/32

(54) **PROCÉDÉ AMÉLIORÉ DE LOCALISATION ET DE CARTOGRAPHIE SIMULTANÉES ; SYSTÈME ET PROGRAMME D ORDINATEUR ASSOCIÉS**

(30) Priorité: 04.06.2024 FR 2405838
(71) Demandeur: THALES, 92190 Meudon (FR)
(72) Inventeur: AUILLANS, Pierre-Jean, 33700 MERIGNAC (FR); TAHIRI, Mohamed, 33700 MERIGNAC (FR); ROUZES, Siegfried, 33700 MERIGNAC (FR)
(74) Mandataire: Lavoix

(57) **Abrégé**

Ce procédé, réalisé par un calculateur (40) embarqué à bord d'un véhicule (1), consiste à : acquérir un ensemble de points à l'instant courant, délivré par un système radar Doppler (30) du véhicule ; acquérir l'attitude à l'instant courant du véhicule, délivrée par une centrale inertielle (20) du véhicule ; orienter l'ensemble de points à l'instant courant par rapport à un référentiel terrain (X₀Y₀Z₀), en tenant compte de l'attitude à l'instant courant ; traitement des vitesses radiales des points pour calculer une vitesse estimée à l'instant courant du véhicule (1) ; calculer une position à l'instant courant du véhicule (1) à partir de la vitesse estimée à l'instant courant ; et exécuter un algorithme de localisation et de cartographie simultanées à partir de la position à l'instant courant du véhicule sur une pluralité d'instants successifs.

## Description

L'invention à pour domaine celui de la navigation en autonomie d'un véhicule, qu'il s'agisse d'un aéronef, d'une automobile, d'un robot, etc.

Plus précisément, l'invention a pour domaine celui des procédés, mis en œuvre par ordinateur en temps réel, consistant à exécuter un algorithme du type localisation et cartographie simultanées. Ces algorithmes sont souvent désignés sous l'acronyme SLAM selon l'anglais « Simultaneous Localization And Mapping ». On rencontre également la dénomination d'algorithme CML pour « Concurrent Mapping and Localization » (localisation et cartographie concurrentes).

Pour un véhicule autonome, un algorithme SLAM consiste à construire ou améliorer une cartographie de l'environnement dans lequel se déplace le véhicule et simultanément à localiser le véhicule dans cette cartographie.

La cartographie correspond à une reconstruction virtuelle de l'environnement, bi ou tridimensionnelle, à partir de points détectés dans l'environnement au moyen d'un dispositif de détection embarqué à bord du véhicule, comme par exemple un Lidar, une ou plusieurs camera(s), ou l'équivalent.

Puisque le dispositif de détection est embarqué, un modèle de déplacement du véhicule est utilisé afin de replacer les points détectés depuis un repère mobile attaché au véhicule, vers un repère terrain, qui est un repère fixe, attaché à l'environnement. Ce modèle peut avantageusement être informé par les sorties d'un dispositif de positionnement embarqué à bord du véhicule, comme une centrale inertielle, un ou plusieurs capteur(s) d'odométrie, ou l'équivalent.

Les corrélations qui peuvent être établies entre les positions des points détectés à l'instant courant et celles des points détectés dans le passé (en tenant compte du déplacement du véhicule donné par le modèle de déplacement) permettent non seulement d'améliorer la cartographie de l'environnement, mais encore le modèle de déplacement du véhicule, pour que ce dernier donner le positionnement instantané du véhicule (constitué de trois coordonnées de position et de trois coordonnées d'orientation du véhicule, lorsque ce dernier a la possibilité de se déplacer selon trois axes) avec précision.

Un algorithme SLAM permet ainsi à un véhicule de naviguer dans un environnement initialement inconnu et qu'il découvre progressivement.

En particulier, cette navigation se fait avantageusement en autonomie, c'est-à-dire sans avoir besoin d'utiliser des moyens extérieurs au véhicule, comme un système de positionnement par satellites - GNSS ("Global Navigation Satellite System") pour déterminer sa position instantanée.

Par exemple, la mise en œuvre d'un algorithme SLAM est adaptée au cas d'usage suivant.

Pour effectuer un atterrissage sur une piste non balisée, le pilote d'un hélicoptère doit d'abord survoler la zone d'atterrissage potentielle pour évaluer à vue les obstacles alentours (arbre, ligne électrique, etc.), ainsi que la pente de la zone d'atterrissage (ou gradient).

Cette phase préparatoire à l'atterrissage peut prendre un temps conséquent. Pour observer sur 360° la zone d'atterrissage, elle peut nécessiter environ trois minutes.

La mise en œuvre d'un procédé du type localisation et cartographie simultanées doit permettre d'automatiser cette phase préparatoire.

Cependant, cette phase doit pouvoir se faire dans des conditions visuelles dégradées, qu'il s'agisse des conditions météorologiques générales du vol (pluie, brouillard, obscurité, etc.) ou de la nature du terrain de la zone d'atterrissage, qui, à l'approche de l'hélicoptère, soulève un nuage de poussière, sable, neige, etc.

La problématique est donc d'obtenir en temps réel et quelles que soient les conditions visuelles, une cartographie précise de l'environnement, ainsi qu'une localisation précise du véhicule dans cette cartographie, et toujours sans recourir à un système de positionnement par satellites.

Le but de cette invention est de résoudre cette problématique.

Pour cela l'invention a pour objet un procédé de localisation et de cartographie simultanées, mis en œuvre par un calculateur d'un système embarqué à bord d'un véhicule, ledit système étant équipé d'une centrale inertielle et d'un système radar Doppler, caractérisé en ce que le procédé comporte les étapes de : acquisition d'un ensemble de points à l'instant courant délivré par le système radar Doppler, un point de l'ensemble de points étant caractérisé par une position et une vitesse radiale dans un repère mobile associé au véhicule ; acquisition de l'attitude à l'instant courant du véhicule, délivrée par la centrale inertielle ; orientation des points de l'ensemble de points à l'instant courant par rapport à un référentiel terrain, fixe, en tenant compte de l'attitude à l'instant courant ; traitement des vitesses radiales des points de l'ensemble de points à l'instant courant pour calculer une vitesse estimée à l'instant courant du véhicule ; calcul d'une position à l'instant courant du véhicule en tenant compte de la vitesse estimée à l'instant courant du véhicule ; et, exécution d'un algorithme de localisation et de cartographie simultanées en tenant compte de la position à l'instant courant du véhicule sur une pluralité d'instants successifs.

Suivant des modes particuliers de réalisation, le procédé comporte une ou plusieurs des caractéristiques suivantes, prises isolément ou suivant toutes les combinaisons techniquement possibles :
- le procédé comporte en outre une étape de filtrage de l'ensemble de points à l'instant courant pour ne conserver que les points correspondant à des objets fixes par rapport au référentiel terrain.
- l'étape de filtrage tient compte d'une vitesse brute à l'instant courant délivrée par la centrale inertielle.
- le calcul d'une position à l'instant courant du véhicule tient compte uniquement de la vitesse estimée à l'instant courant du véhicule.
- le procédé comporte une étape de correction de la vitesse brute à l'instant courant en tenant compte de la vitesse estimée à l'instant courant du véhicule de manière à obtenir une vitesse corrigée à l'instant courant, et dans lequel le calcul d'une position à l'instant courant du véhicule est effectué à partir de la vitesse corrigée à l'instant courant.

L'invention a également pour objet un système adapté pour mettre en œuvre un procédé de localisation et de cartographie simultanées conforme au procédé précédent, le système comprenant : un système radar Doppler ; une centrale inertielle ; et un calculateur convenablement programmé.

De préférence, le système radar Doppler est du type radar à onde continue modulée en fréquence.

De préférence encore, le calculateur met en œuvre un algorithme de localisation et de cartographie simultanées du type détermination itérative du point le plus proche.

L'invention a également pour objet un produit programme d'ordinateur comportant des instructions logicielles qui, lorsqu'elles sont exécutées par le calculateur d'un système conforme au système précédent, permet de mettre en œuvre tout ou partie des étapes d'un procédé de localisation et de cartographie simultanées conforme au procédé précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
La figure 1 est une illustration d'un cas d'usage particulier du procédé et du système selon l'invention ;
La figure 2 est une représentation schématique sous forme de modules fonctionnels d'un mode de réalisation d'un système selon l'invention ; et,
La figure 3 est une représentation sous forme de blocs d'un mode de réalisation du procédé d'identification selon l'invention.

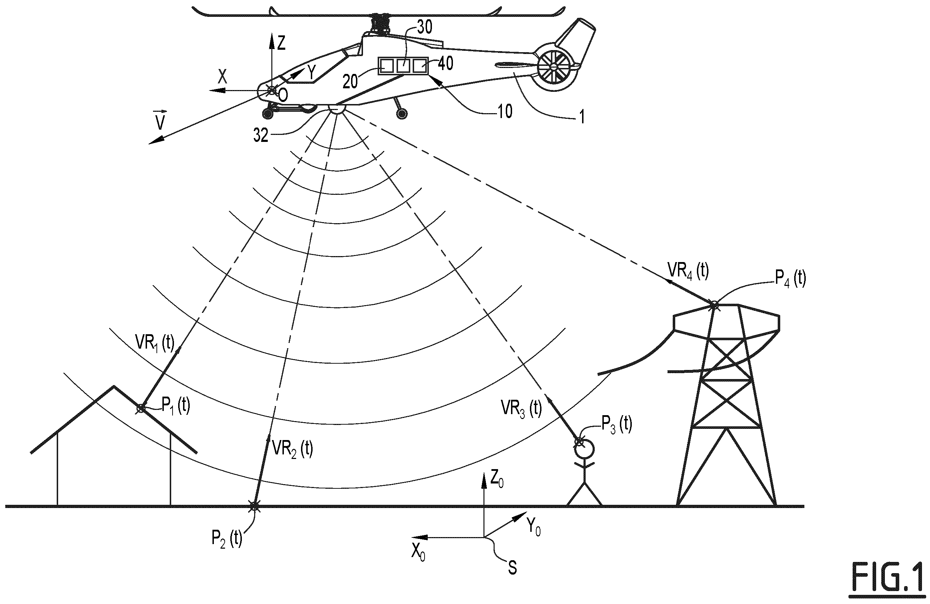

La figure 1 est une illustration d'un cas d'usage particulier du système 10 et du procédé 100 selon l'invention.

Dans ce cas d'usage, le système 10 selon l'invention est embarqué à bord d'un hélicoptère 1, en tant qu'exemple particulier d'un véhicule autonome adaptée pour se déplacer selon trois axes. Le cas particulier d'un aéronef, et plus particulièrement d'un hélicoptère, est utilisé pour décrire l'invention, mais l'invention peut s'appliquer à tout type de véhicule, soit pour aider le pilote de ce véhicule, soit pour piloter le véhicule de manière automatique.

Un repère mobile est associé à l'hélicoptère 1. Il est repéré par les axes X, Y et Z sur la figure 1. Ce repère mobile est attaché à un point O de l'hélicoptère 1.

L'hélicoptère est animé d'une vitesse instantanée vectorielle V̅(t).

Le système 10 comporte une centrale inertielle 20, un système radar Doppler 30, et un calculateur 40.

Le système 30 comporte une antenne 32 et des moyens, matériels et logiciels, associés au fonctionnement de cette antenne.

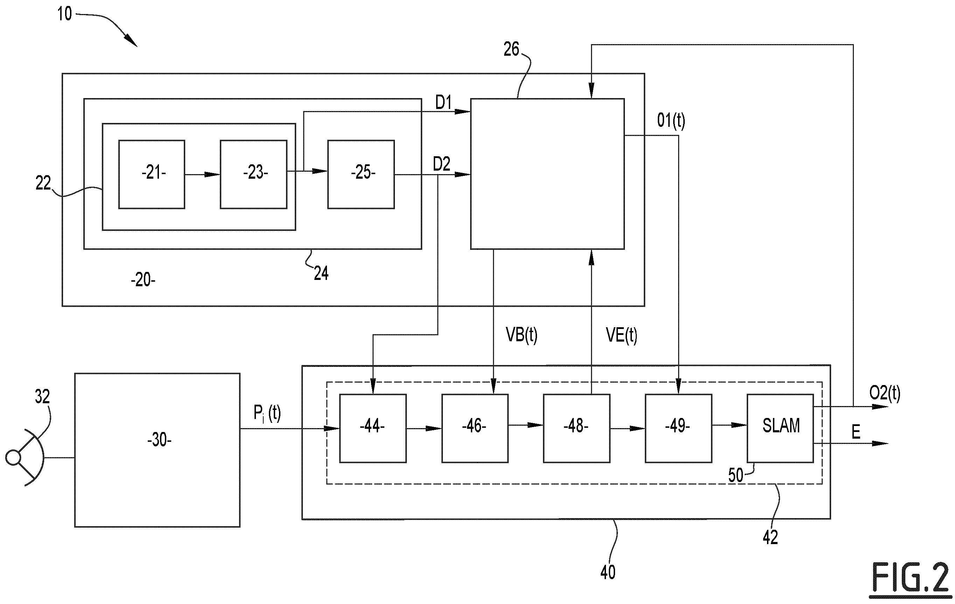

Ces différentes composantes du système 10 seront présentées en détail ci-dessous en référence à la figure 2.

Périodiquement, le système radar 30 scanne un domaine d'observation situé à l'intérieur de l'environnement de l'hélicoptère 1. Ce domaine d'observation couvre par exemple tout ou partie d'une zone d'intérêt au sol, comme une zone d'atterrissage potentielle.

Un repère de référence, fixe au sol, ou repère terrain est repéré par les axes X₀, Y₀ et Z₀ sur la figure 1. Ce repère terrain est attaché à un point S de l'environnement.

Pour chaque période de son fonctionnement, le système radar 30 délivre un ensemble de points. Par exemple, sur la figure 1 et pour l'instant courant t, on a représenté un point P₁(t) associé à un bâtiment, un point P₂(t) associé au sol lui-même, un point P₃(t) associé à un individu se déplaçant à la surface du sol, et un point P₄(t) associé à un élément de structure, comme un pylône électrique.

Un point Pᵢ (i entier entre 1 et N(t), où N(t) est le nombre total de points dans l'ensemble de points délivré par le radar 30 à l'instant t) est associé à un objet ou une portion d'objet ayant réfléchi un écho après avoir été « éclairé » par le système radar 30.

Un point Pᵢ se caractérise par une distance par rapport à l'antenne 32 du système radar 30. Connaissant la direction dans laquelle l'écho a été reçu, le système radar 30 détermine la position du point Pi dans le repère mobile XYZ.

Le système radar 30 étant un système radar Doppler, il est adapté pour traiter un écho reçu de manière à en mesurer la vitesse Doppler. La vitesse Doppler est une vitesse radiale, c'est-à-dire la projection de la vitesse instantanée de l'objet réflecteur sur la direction joignant le système radar 30 et l'objet réflecteur (le point Pi(t) source de l'écho). Cette vitesse est notée VRᵢ(t) sur la figure 1. Elle est évaluée dans le repère mobile XYZ.

Un mode de réalisation particulier du système 10 va maintenant être présenté en relation avec la figure 2.

Le système 10 intègre un système radar Doppler 30. Avantageusement, il s'agit d'un système radar Doppler du commerce ou COTS (« Commercial Off-The-Shelf»).

De préférence, le système radar Doppler 30 est un radar à onde continue modulée en fréquence - FMCW (« Frequency Modulated Continuous Wave). En émettant une onde continue modulée en fréquence, l'écho réfléchi par un objet de l'environnement est traité, dans le domaine fréquentiel, pour obtenir la distance séparant le radar de l'objet réflecteur le long de la direction de pointage du radar à l'instant de réception de l'écho, ainsi que la vitesse Doppler de cet objet réflecteur.

La position et la vitesse radiale d'un écho constituent les données de sorties du système radar Doppler 30. La position peut être une position en coordonnées radiales (direction et distance le long de cette direction) ou en coordonnées cartésiennes (position le long des trois axes du repère mobile) dans le repère mobile.

D'autres sorties peuvent avantageusement être associées à un point, comme l'amplitude de l'écho.

En considérant un intervalle temporel permettant au système radar Doppler 30 de balayer une fois son domaine d'observation, un ensemble de points est délivré par le radar Doppler à chaque période de balayage. Dans ce qui suit, la période de balayage est prise comme période élémentaire de mise en œuvre du procédé 100. Notamment, par « instantané », on entend une valeur d'une grandeur physique obtenue pour la période élémentaire courante.

Le système 10 intègre une centrale inertielle - INS (« inertial navigation system ») 20. Avantageusement, il s'agit d'une centrale inertielle du commerce ou COTS (« Commercial Off-The-Shelf »).

De manière générale, une centrale inertielle 20 peut-être décrite comme comportant une unité de mesure inertielle - IMU ("Inertial Measurement Unit") 22. Celle-ci intègre un ensemble de capteurs 21, notamment des accéléromètres et des gyroscopes, et une électronique associée 23, permettant de traiter les signaux délivrés par les capteurs 21 et de générer un premier ensemble de données D1.

Ce premier ensemble de données D1 correspond à l'accélération linéaire selon les trois axes du repère terrain X₀Y₀Z₀ et les vitesses de rotation instantanées autour de chacun de ces axes.

La centrale inertielle 20 comporte une unité d'attitude - AHRS ("Attitude Heading Reference System") 24. L'unité 24 associe à l'IMU 22, un calculateur d'attitude 25. Le calculateur d'attitude 25 prend en entrée le premier ensemble de données D1, délivré par l'IMU 22, et calcule en sortie un second ensemble de données D2.

Ce second ensemble de données D2 comporte l'attitude instantanée de l'aéronef par rapport au repère terrain. L'attitude se caractérise par trois angles, respectivement le cap (soit l'angle entre l'axe longitudinal du véhicule et la direction du pôle magnétique ou géographique), l'assiette (soit l'angle entre l'axe longitudinal du véhicule et un plan horizontal) et l'inclinaison (soit l'angle entre l'axe transversal et un plan horizontal).

Enfin, la centrale inertielle 20 associe à l'unité AHRS 24, un calculateur de navigation 26. Le calculateur de navigation 26 prend en entrée les premier et second ensembles de données, D1 et D2, et calcule en sortie un troisième ensemble de données.

Ce troisième ensemble de données comporte une vitesse instantanée de l'aéronef VB(t) et une position instantanée de l'aéronef O1(t) par rapport au repère terrain,

Le système 10 intègre un calculateur 40, qui est connecté, d'une part, en sortie du système radar 30 et, d'autre part, en entrée et en sortie, de la centrale inertielle 20.

Le calculateur 40 est un ordinateur comportant des moyens de calcul, tels qu'un processeur, et des moyens de mémorisation, tels qu'une mémoire.

La mémoire stocke notamment les instructions d'un programme d'ordinateur 42 dont l'exécution permet la mise en œuvre du procédé 100 selon l'invention.

De manière schématique, dans le mode de réalisation préféré, le programme 42 comporte une module d'orientation 44, un module de filtrage 46, un module de calcul de la vitesse instantanée de l'aéronef par rapport au sol 48, un module de géoréférencement 49 et un module SLAM 50.

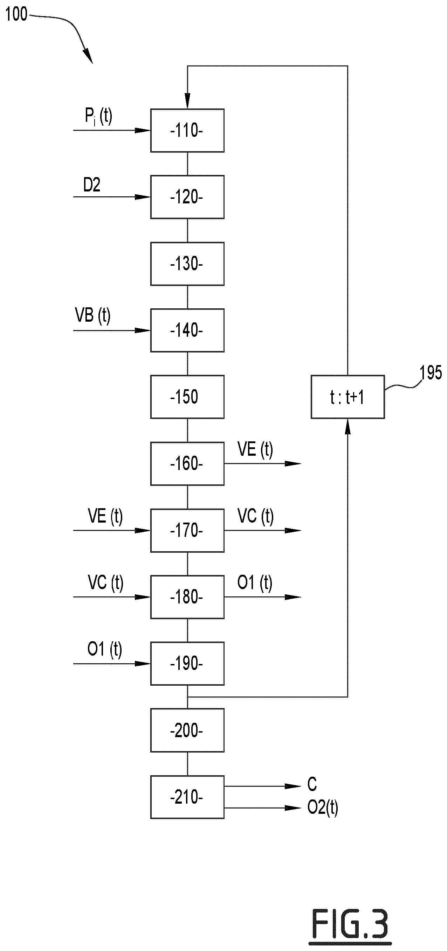

Un mode de réalisation préféré du procédé selon l'invention va maintenant être présenté en référence à la figure 3.

Le procédé 100 débute par une étape 110 d'acquisition, par le calculateur 40, des données délivrées par le système radar Doppler 30. Ce dernier fournit périodiquement les résultats d'un balayage de son domaine d'observation. Les données délivrées par le système radar 30 à l'instant courant correspondent à un ensemble de points. A chaque point Pᵢ(t) de cet ensemble sont associées une position et une vitesse radiale, ces grandeurs étant évaluées dans le référentiel mobile XYZ de l'aéronef, à l'instant courant t.

Le procédé 100 se poursuit par une étape 120 d'acquisition, par le calculateur 40, du second ensemble de données D2 délivré à l'instant courant t par l'unité AHRS 24 de la centrale inertielle 20. Ces données sont l'attitude de l'aéronef 1 à l'instant courant, c'est-à-dire la direction des axes XYZ par rapport au repère terrain X₀Y₀Z₀.

Dans une étape 130, correspondant à l'exécution du module d'orientation 44 par le calculateur 40, chaque point de l'ensemble de points obtenu à l'étape 110 est orienté correctement dans le repère terrain, en tenant compte de l'attitude instantanée obtenue à l'étape 120. L'attitude à l'instant courant permet en effet d'orienter le repère mobile par rapport au repère terrain (moyennant une transformation rigide entre l'antenne du système radar 30 et la centrale inertielle 20, dont les paramètres sont connues, suite par exemple à une étape préalable de calibration du système 10).

Suite à la réalisation, par le calculateur de navigation 26 de la centrale inertielle 20, d'une première intégration temporelle des données délivrées par les unités 22 et 24, permettant de déterminer une première vitesse instantanée de l'aéronef dans le repère terrain, cette vitesse est acquise par le calculateur 40 à l'étape 140 en tant que vitesse brute instantanée VB(t).

L'étape 150, correspondant à l'exécution du module 46 par le calculateur 40, consiste à filtrer les vitesses radiales des points de l'ensemble de points obtenu à l'étape 110 et convenablement orientés à l'étape 130.

En effet, certains des points de cet ensemble de points correspondent à des objets fixes au sol. Leur vitesse radiale est en relation avec la vitesse instantanée du véhicule par rapport au sol, i.e. la vitesse du repère mobile par rapport au repère terrain. C'est l'information portée par ces points dits fixes qui est pertinente pour la suite du procédé 100.

Cependant, en plus de ces points fixes, l'ensemble de points à l'instant courant comporte éventuellement des points qui correspondent à des objets mobiles par rapport au sol, comme par exemple un arbre qui bouge sous l'effet du vent, une personne qui se déplace, une automobile qui roule, etc.

L'étape 150 de filtrage consiste alors à extraire les points mobiles de l'ensemble de points Pᵢ(t) pour que leur vitesse radiale, qui leur est propre, ne vienne pas perturber la suite du procédé 100.

Pour séparer les points mobiles des points fixes dans l'ensemble de points à l'instant courant, on tient compte d'une vitesse de filtrage, qui correspond à la vitesse instantanée de l'aéronef 1 par rapport au sol.

Pour savoir si un point est fixe ou mobile, il faut tenir compte non seulement de la valeur de la vitesse radiale de ce point, mais également de la direction le long de laquelle est évaluée cette vitesse radiale, c'est-à-dire la direction entre le système radar et le point considéré. En effet, la vitesse radiale d'un point fixe situé le long d'une direction parallèle à celle de la vitesse du véhicule est sensiblement égale à la vitesse instantanée de l'aéronef (vitesse radiale négative pour un point situé en avant de l'aéronef et positive pour un point à l'arrière de l'aéronef, l'avant et l'arrière étant évalués le long de la direction de la vitesse instantanée de l'aéronef). Au contraire, la vitesse radiale d'un point fixe situé le long d'une direction orthogonale à celle de la vitesse de l'aéronef est sensiblement nulle.

Avantageusement, cette étape de filtrage est réalisée en considérant que la vitesse instantanée du véhicule est égale à la vitesse brute instantanée VB(t) acquise à l'étape 140.

Avantageusement, on filtre les points en tenant compte également d'une incertitude sur la valeur de la vitesse de filtrage.

En variante, l'étape 140 n'est pas réalisée, et la vitesse instantanée du véhicule autour de laquelle le filtrage est effectuée est estimée par un traitement adapté, par exemple statistique, des vitesses radiales et des positions des points de l'ensemble de points à l'instant courant.

L'étape 150 permet ainsi d'obtenir un sous-ensemble de points correspondant à des objets fixes au sol.

Seul le sous-ensemble des points fixes est utilisé dans la suite du procédé 100. Cependant, le sous-ensemble complémentaire correspondant à des points associés à des objets mobiles peut être utilisé dans d'autres traitements, comme par exemple un algorithme de détection de présence dans la zone envisagée pour l'atterrissage de l'hélicoptère, qui émet une alarme, par exemple sonore, vers le pilote, en cas de détection de la présence d'une personne dans cette zone.

L'étape 160 suivante du procédé 100 consiste à calculer une seconde vitesse instantanée de l'aéronef 1, VE(t), à partir des vitesses radiales des points du sous-ensemble de points fixes. L'étape 160 correspond à l'exécution du module 48 par le calculateur 40.

On connaît des algorithmes, comme par exemple ceux d'un système Janus, qui, à partir de la vitesse radiale associée à au moins quatre points fixes dans autant de directions différentes, permettent d'estimer la vitesse du porteur. Avantageusement, la totalité des points fixes à l'instant courant est utilisée en effectuant une régression des moindres carrés.

Ainsi, à l'issue de l'étape 160, une vitesse estimée instantanée VE(t) de l'aéronef dans le repère terrain est obtenue.

L'étape 180 consiste à déterminer, par le calculateur de navigation 26 de la centrale inertielle 20, la position instantanée O1(t) de l'aéronef 1 à partir de sa vitesse instantanée en effectuant une intégration temporelle.

Dans un mode de réalisation simple, la vitesse qui est intégrée à l'étape 180 est la vitesse estimée instantanée VE(t) obtenue directement en sortie de l'étape 160.

De préférence cependant, la vitesse estimée instantanée VE(t) en sortie de l'étape 160 est appliquée en entrée du calculateur de navigation 26 de la centrale inertielle 20, par exemple en tant que grandeur permettant de recaler la vitesse instantanée calculée par le calculateur de navigation de la centrale inertielle, pour éviter qu'elle ne dérive.

Ainsi, dans l'étape 170 la vitesse brute instantanée VB(t) obtenue à l'étape 140 est corrigée, en tenant compte de la vitesse estimée instantanée VE(t) obtenue à l'étape 160.

Une vitesse corrigée instantanée VC(t) est ainsi déterminée à l'issue de l'étape 170. C'est cette grandeur corrigée qui est appliquée en entrée de l'étape 180 pour être intégrée temporellement et ainsi obtenir la position instantanée O1(t) du véhicule dans le repère terrain.

Ce mode de réalisation est particulièrement avantageux puisqu'il permet de réutiliser les algorithmes mis en œuvre par le calculateur de navigation 26 de la centrale inertielle, notamment les algorithmes du type « filtre de Kalman » généralement exécutés par les calculateurs de navigation des centrales inertielles.

La position instantanée du véhicule O1(t) permet ensuite, dans une étape 190 correspondant à l'exécution du module 49, de géoréférencer les points de l'ensemble de points à l'instant courant, les points fixes, mais de préférence les points mobiles également.

Puis, suite à l'itération (étape 195) des étapes 110 à 190 sur une succession d'instants (et donc d'ensemble de points), dans une étape 200, un algorithme SLAM est exécuté.

Par exemple les cinq derniers ensembles de points acquis et traité par les étapes 110 à 180, sont pris en compte lors de l'exécution courante l'algorithme SLAM.

L'étape 200 correspond à l'exécution du module 50 par le calculateur 40. Par exemple, il s'agit d'un algorithme SLAM du type ICP (« Iterative Closest Point » ou détermination itérative du point le plus proche).

Ainsi, de proche en proche, les nuages de points acquis à chaque période de fonctionnement du système radar 30 permettent de reconstruire l'environnement tridimensionnel à l'intérieur duquel se déplace l'hélicoptère 1.

Avantageusement, l'algorithme SLAM, lorsqu'il réalise l'appariement de points entre deux nuages de points acquis à des instants différents conduit non seulement à une correction de la position des points de la cartographie, mais également à une correction de la position instantanée du véhicule (étape 210). Ainsi une position instantanée corrigée O2(t) de l'aéronef 1 particulièrement précise est obtenue en sortie de l'étape 210, en plus de la cartographie précise de l'environnement C.

Avantageusement, cette position instantanée corrigée O2(t) est utilisée dans l'étape 180. Par exemple, lorsque l'étape 180 est réalisée par le calculateur de navigation de la centrale inertielle, la position instantanée corrigée délivrée par l'algorithme SLAM permet de recaler la centrale inertielle.

Ainsi, la présente invention évite la double intégration temporelle normalement réalisée par le calculateur de navigation d'une centrale inertielle, lorsque ce dernier calcule la position instantanée à partir des seules mesures réalisées par les capteurs de l'IMU. Dit autrement, la présente invention évite la dérive temporelle rapide sur la valeur de la position instantanée calculée par une centrale inertielle selon l'état de la technique, ou tout au moins la dérive temporelle d'une centrale inertielle à bas coûts.

Avec la mise en œuvre de l'invention, la position instantanée est obtenue en effectuant une seule intégration de la vitesse instantanée, qu'il s'agisse de la vitesse estimée en n'utilisant que des données associées aux nuages de points délivrés par le système radar ou qu'il s'agisse de la vitesse corrigée par la centrale inertielle en tenant compte de la vitesse estimée en sortie du traitement des données associées aux nuages de points délivrés par le système radar.

De plus, la présente invention évite la dérive temporelle rapide sur la valeur de la position instantanée calculée par une centrale inertielle selon l'état de la technique en contraignant le calcul de la position instantanée effectuée par la centrale inertielle en utilisant la position instantanée obtenue en sortie de l'algorithme SLAM.

Un radar, bien qu'il ait une résolution spatiale plus faible que celle d'un Lidar ou d'une caméra optique, fonctionne dans une gamme étendue de conditions visuelles, notamment des conditions visuelles dégradées, voire très dégradées.

En mettant en œuvre une fusion des données délivrées par un système radar et une centrale inertielle, le procédé selon l'invention permet d'atteindre une précision importante.

Des composants standards du commerce peuvent alors être utilisés, notamment des composants à prix réduits, qui présentent individuellement une précision réduite.

L'invention est particulièrement bien adaptée à des aéronefs du type des drones, notamment pour effectuer en autonomie des atterrissages. Mais elle trouve d'autres applications, notamment pour les véhicules autonomes comme des robots mobiles circulant dans un hangar.

L'étape 150 de filtrage des points pour séparer points fixes et points mobile est facultative. Il est préférable de la mettre en œuvre pour gagner en précision. Cependant, en variante, il est possible d'évaluer la vitesse VE(t) à partir de l'ensemble complet des points, en mettant en œuvre une procédure statistique par exemple. Dans ce cas, bien que les points mobiles dégradent la statistique, on peut faire l'hypothèse de points faiblement mobiles par rapport au porteur et / ou de vitesse moyenne nulle pour le sous-ensemble des points mobiles par rapport au porteur.

## Revendications

1. Procédé (100) de localisation et de cartographie simultanées, mis en œuvre par un calculateur (40) d'un système embarqué à bord d'un véhicule (1), ledit système étant équipé d'une centrale inertielle (20) et d'un système radar Doppler (30), **caractérisé en ce que** le procédé comporte les étapes de :
- acquisition (110) d'un ensemble de points à l'instant courant délivré par le système radar Doppler (30), un point (Pᵢ) de l'ensemble de points étant **caractérisé par** une position et une vitesse radiale dans un repère mobile (XYZ) associé au véhicule (1) ;
- acquisition (120) de l'attitude à l'instant courant du véhicule, délivrée par la centrale inertielle (20) ;
- orientation (130) des points de l'ensemble de points à l'instant courant par rapport à un référentiel terrain (X₀Y₀Z₀), fixe, en tenant compte de l'attitude à l'instant courant ;
- traitement (160) des vitesses radiales des points de l'ensemble de points à l'instant courant pour calculer une vitesse estimée à l'instant courant (VE(t)) du véhicule (1) ;
- calcul (180) d'une position à l'instant courant (O1(t)) du véhicule (1) en tenant compte de la vitesse estimée à l'instant courant du véhicule ; et,
- exécution (200) d'un algorithme de localisation et de cartographie simultanées en tenant compte de la position à l'instant courant du véhicule sur une pluralité d'instants successifs.

2. Procédé selon la revendication 1, comportant en outre une étape (150) de filtrage de l'ensemble de points à l'instant courant pour ne conserver que les points correspondant à des objets fixes par rapport au référentiel terrain.

3. Procédé selon la revendication 2, dans lequel l'étape de filtrage tient compte d'une vitesse brute à l'instant courant (VB(t)) délivrée par la centrale inertielle (40).

4. Procédé selon l'une quelconque des revendications 1 à 3, dans lequel le calcul d'une position à l'instant courant du véhicule tient compte uniquement de la vitesse estimée à l'instant courant du véhicule.

5. Procédé selon la revendication 3, comportant une étape de correction de la vitesse brute à l'instant courant en tenant compte de la vitesse estimée à l'instant courant du véhicule de manière à obtenir une vitesse corrigée à l'instant courant (VC(t)), et dans lequel le calcul d'une position à l'instant courant du véhicule est effectué à partir de la vitesse corrigée à l'instant courant.

6. Système (10) adapté pour mettre en œuvre un procédé (100) de localisation et de cartographie simultanées conforme à l'une quelconque des revendications 1 à 5, le système (10) comprenant :
- un système radar Doppler (30) ;
- une centrale inertielle (20) ; et
- un calculateur (40) convenablement programmé.

7. Système selon la revendication 6, dans lequel le système radar Doppler (30) est du type radar à onde continue modulée en fréquence.

8. Système selon la revendication 6 ou la revendication 7, dans lequel le calculateur (40) met en œuvre un algorithme de localisation et de cartographie simultanées du type détermination itérative du point le plus proche.

9. Programme d'ordinateur comportant des instructions logicielles qui, lorsqu'elles sont exécutées par le calculateur (40) d'un système (10) conforme à l'une quelconque des revendications 6 à 8, permet de mettre en œuvre tout ou partie des étapes d'un procédé (100) de localisation et de cartographie simultanées conforme à l'une quelconque des revendications 1 à 5.
